# EUROPEAN PATENT SPECIFICATION

(11) **EP 2 930 057 B1**
(45) Date of publication and mention of the grant of the patent: **03.05.2017**
(21) Application number: 15163240.3
(22) Date of filing: 10.04.2015
(51) Int. Cl.: B60N 2/68, B60N 2/24, B60N 2/015, B60N 2/01, B60R 22/26, B60P 3/32

(54) **MOTOR CARAVAN SEATING**
MOTORWOHNWAGENSITZ
SIÈGE POUR CAMPING-CAR

(30) Priority: 10.04.2014 GB 201406490
(43) Date of publication of application: 14.10.2015
(73) Proprietor: Cascade Conversions Limited, Rhondda Cynon Taf CF72 9DJ (GB)
(72) Inventor: Davies, Robert, Rhondda Cynon Taff, CF72 9FB (GB)
(74) Representative: chapman + co

(56) References cited:
- EP-A1- 1 211 131
- EP-A2- 0 525 618
- DE-U1- 9 308 942
- DE-U1-202006 013 033
- FR-A1- 2 903 351

## Description

This invention relates to seating for a motorcaravan.

Motorhomes, campervans and other kinds of motorcaravans are often converted from a commercial vehicle such as a panel van by installing furniture units and seats in the rear load area of the vehicle.

FR2903351 discloses a bench seat comprising a frame equipped with two seat belts for two seats. The frame is fixed on a floor armour that is fixed on an upper surface of a floor of a motorcaravan. Each seat belt has a strap whose two ends are anchored to posts of the frame to anchor a closing loop of the seat belt to a support of the frame. Each post is arranged between the two seats. The armour has an aluminum plate with a thickness ranging between 25 and 30 mm.

DE202006013033 discloses a seating system for motorcaravans comprising an L-shaped seat cushion has adjacent seat cushion sections. A backrest cushion has two adjacent backrest cushion sections supported on a backrest frame. A seatbelt system is stored within a section of the backrest frame, and is exposed for usage by moving one of the backrest cushion section sideways. One of the seat cushion sections is foldable, while the other seat cushion section is laterally movable.

EP1211131 discloses a bench for motorcaravan which is installed in the vehicle longitudinal direction and comprises a separate seat having a seat back, which can be pulled out laterally to provide a single forward facing seat having a seat belt.

DE9308942 discloses to a bench seat for vehicles, particularly motorcaravans, consisting of a seat frame with a seat and seat back for at least two persons. The seat has a frame provided with a mounting device for safety belts.

EP0525618 discloses a bench for mobile homes, vans or the like, having a seat component and a swivelable backrest component and having a guide and locking device for adjustment of the bench in the longitudinal direction of the vehicle. According to the invention the aforesaid bench is characterised by a tubular profile frame having upper and lower longitudinal struts which lie essentially opposite one another in pairs and having upper and lower transverse struts, the lower longitudinal struts and transverse struts forming a base frame, having running rollers which are mounted rotatably in pairs opposite one another on the underside of the base frame and having sliding profile bodies for engagement in a pair of floor guiding rails which extend in the longitudinal direction of the vehicle and having locking bolts which,; controlled by an actuation shaft, penetrate the lower longitudinal struts essentially vertically with respect to the locking engagement with the floor guiding rails and are connected to the actuation shaft by transmission levers which are pre-stressed in a resilient fashion in the direction of engagement.

The seats of motoracaravans are generally arranged to convert into beds for sleeping. Typically the seat comprises a single bench seat arranged transversely about one meter in front of the rear of the vehicle.

A disadvantage of this arrangement is that the space on the bench seat is limited to two people and hence the front seats have to be used for eating around a table or for entertaining. However, in order to use the front seats, the seats have to be fitted with a device which enables the seats to be rotated to a rearwardly-facing position.

A popular alternative to the above-mentioned bench seat layout is the so-called u-shaped lounge layout comprising a seat having a central portion which extends transversally across the rear of the vehicle and opposite side portions which extend forwardly from opposite ends of the central portion and which are separated by a gap. In use, people can sit on all three portions of the seat with their legs extending into the gap. A table can also be mounted above the gap.

A disadvantage of the u-shaped lounge layout is that most commercial vehicles do not have any provision for the mounting of seatbelts at the rear of the vehicle and hence motorcaravans having such a layout are limited to only carrying passengers in the front seats of the vehicle.

I have now devised a seat for a motorcaravan which alleviates the above-mentioned problem.

In accordance with the present invention there is provided a seat for a motorcaravan comprising a central seat portion and opposite side seat portions extending forwardly from respective opposite ends of the front of the central portion and defining a gap therebetween, each seat portion comprising a base, a seat cushion mounted on the base and a backrest, wherein a post upstands from the rear of the base of the central portion adjacent opposite ends thereof, the upper end of each post providing an upper anchorage point for a seat belt disposed above the backrest of the central portion, each end of the base of the central portion comprising first and second outer anchorage points for the ends of a seat belt and an inner anchorage point for a seat belt buckle receptacle.

A seat belt reel can be fitted to the first outer anchorage point, the webbing of the seat belt then extending upwardly through an eyelet fitted to the upper anchorage point. An eyelet on the free end of the webbing is fitted to the second outer anchorage point. A buckle slidably mounted on the webbing can be detachably connected to the seat belt buckle receptacle. It will be appreciated that seat in accordance with the present invention provides a u-shaped lounge configuration which is safely able to carry two belted passengers.

Preferably the upper ends of the posts are interconnected by a cross-member. Headrests are preferably disposed on the cross-member.

Any seating arranged to carry passengers must meet strict legislative standards, namely it must have approved seatbelts which are installed correctly and the anchorages must be of a predefined strength. In Europe, legislation dictates that seatbelt anchorages must be able to withstand forwardly pulling forces of 30kN for not less than 0.2 seconds. Whilst the posts of the seat in accordance with the present invention can be made of a material sufficiently strong to withstand such forces, any such forces applied to the post are amplified and transmitted to the base which will deform. Since weight is an important factor in motorcaravans, it is not possible to construct the base of a material which is able to withstand such forces.

In order to solve the above-mentioned problem, the base of the central portion preferably comprises a rear wall at least partially defined by the lower ends of the posts, each end of the central portion comprising a first and second bracing members extending forwardly and downwardly from an upper portion of the wall to respective first and second points of the seat, said second point being disposed forwardly of the first point.

Preferably said inner and outer anchorage points are disposed on said rear wall.

When a force is applied to the anchorage points, the bracing members prevent the wall from distorting forwardly and the different positions of the lower ends of the bracing members serve to spread the applied force so that the force is not transmitted to just one point.

Preferably the forward end of each first bracing member extends to the front of the base of the central portion, preferably to a point disposed at the rear end of the base of its respective side seat portion.

Preferably the forward end of each first bracing member are interconnected by a cross-member.

Preferably the rearward ends of the first bracing members extends from respective posts.

Preferably the forward end of each second bracing member extends into the base of its respective side seat portion, preferably to a point disposed at the forward end thereof. This arrangement helps to prevent the seat from distorting between its front and back.

Preferably a central portion of each second bracing member is attached to the front of the base of the central portion.

Preferably the seat comprises opposite outer side walls which are at least partially defined by said second bracing members.

Preferably the bases of the seat portions are formed as a unitary frame member.

Preferably said inner and outer anchorage points on said rear wall comprise apertures formed in plates attached to said frame member.

Preferably each post is disposed longitudinally rearwardly of the inner sidewall of the base of its respective side seat portion. Preferably a frame member forming the upper edge of the inner sidewall of the base of each side seat portion is connected at its rear end to its respective post.

Preferably the seat comprises apertures on the bottom thereof, through with bolts can be passed to anchor the seat to the floor of the vehicle.

Also in accordance with the present invention, there is provided a motorcaravan comprising a vehicle and a seat as hereinbefore defined fitted to a floor disposed inside a rear area of the vehicle.

Preferably the seat is fitted at the rear of the vehicle.

When fitting a belted seat to the floor of a commercial vehicle, it is important that the seat is not merely anchored to the floor material and that it is anchored to an underlying chassis member. However, a portion of chassis may not be disposed in the correct place or may not be suitable for receiving bolts or other fastenings without undesirably modifying or drilling it.

Also in accordance with the present invention, there is provided a method of fitting a seat as hereinbefore defined to a vehicle, the method comprising removing a plurality of bolts holding respective load lashing points to externally screw-threaded mountings on the floor of the vehicle, positioning the seat such that apertures on the bottom thereof align with said mountings and fastening the seat in-situ by passing bolts through the apertures into the mountings.

Many commercial vehicles comprise load lashing points on the floor and we have realised that such points can be used to reliably secure the seat.

An embodiment of the present invention will now be described by way of an example only and with reference to the accompanying drawings, in which:
Figure 1 is a perspective view from the front and above of an assembled seat in accordance with the present invention;
Figure 2 is a perspective view from the front and above of a frame of the seat of Figure 1;
Figure 3 is a perspective view from the left side and above of the frame of the seat of Figure 1;
Figure 4 is a perspective view from the rear and above of the frame of the seat of Figure 1; and
Figure 5 is a perspective view from the right side and above of the frame of the seat of Figure 1.

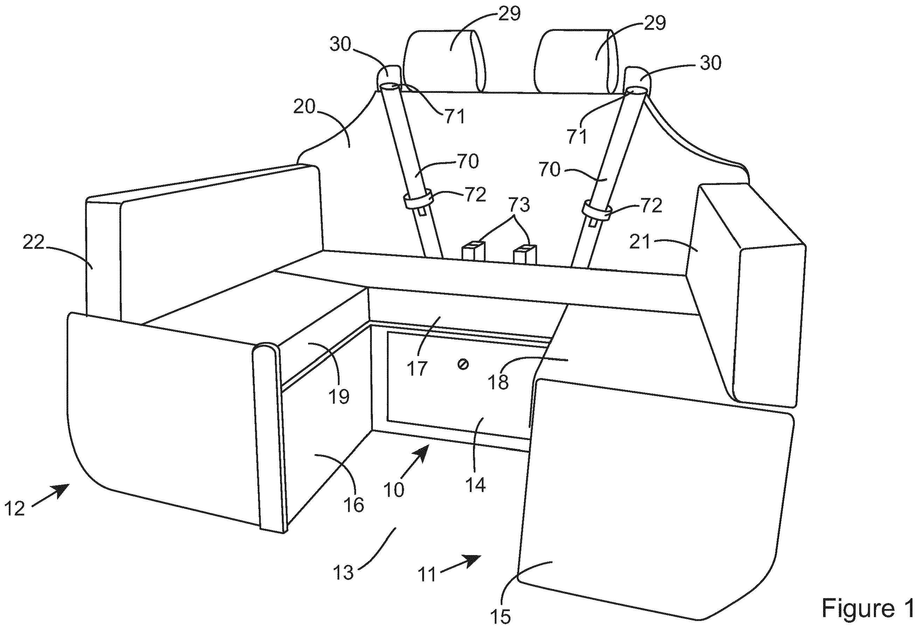

Referring to Figure 1 of the drawings, there is shown a seat in accordance with the present invention for fitting inside a panel van to convert the latter into a motorcaravan. The seat comprises a central portion 10 and left and right seat portions 11,12 extending forwardly from respective opposite ends of the front of the central portion 10. A gap 13 is disposed between the left and right seat portions 11,12. Each seat portion 10,11,12 respectively comprises a base 14,15,16, a seat portion 17,18,19 and a backrest 20,21,22.

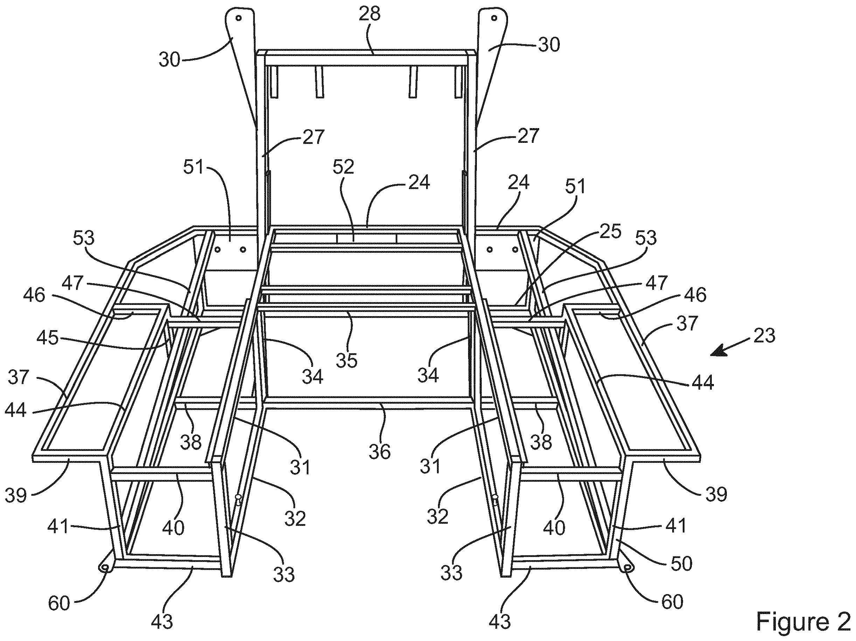

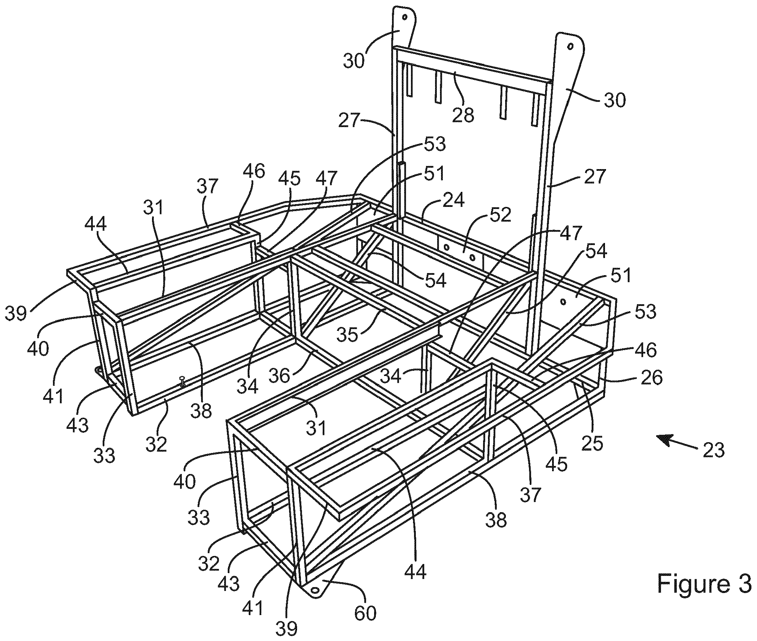

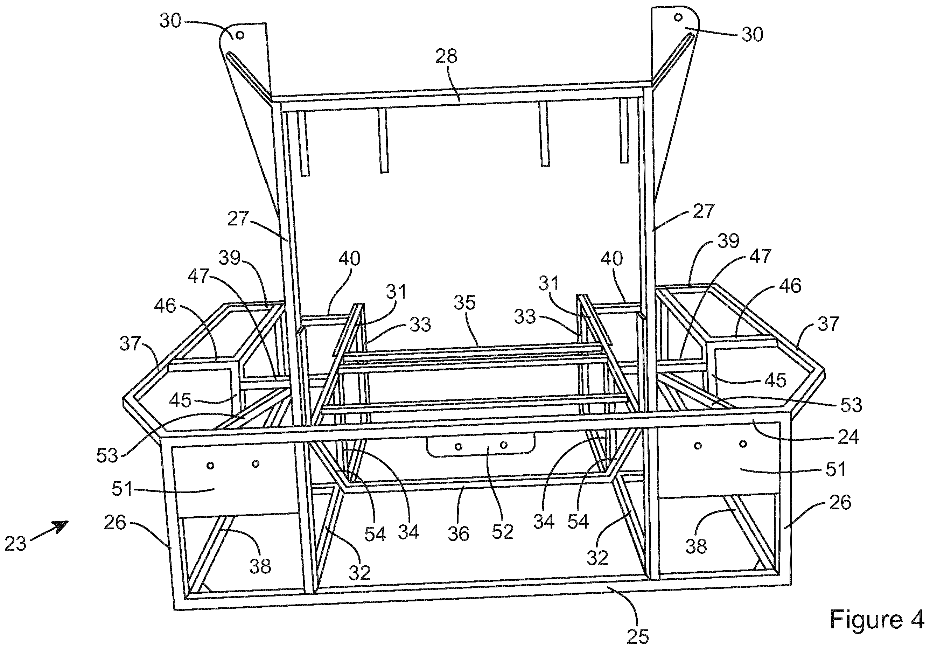

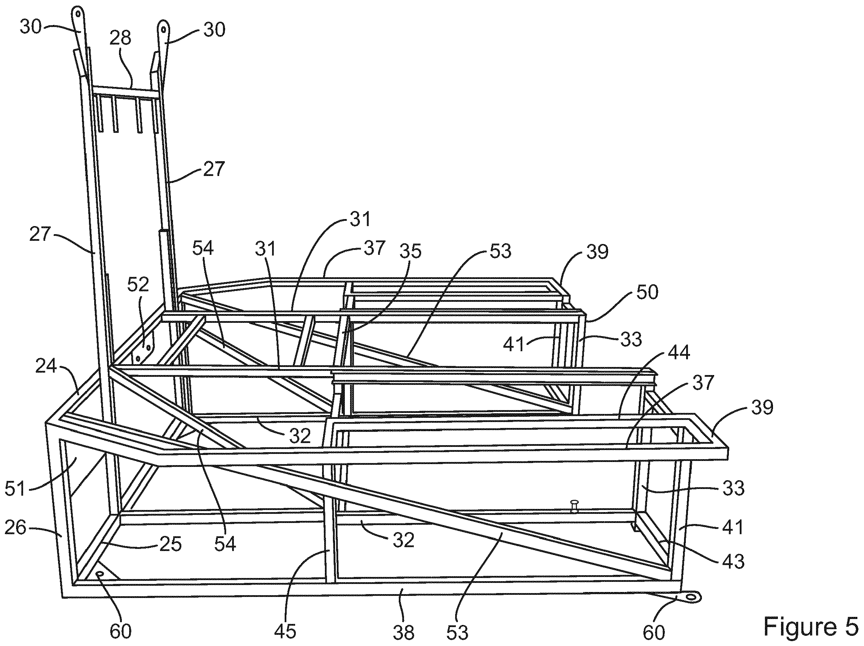

Referring to Figures 2 to 5 of the drawings, the bases 14,15,16 are formed by a unitary frame member 23 formed of a metal such as a steel, which supports the cushions 17,18,19. A rear wall of the frame 23 comprises upper and lower rear crossmembers 24,25 interconnected at their opposite ends by rear uprights 26. A pair of posts 27 extend upwardly from the lower rear cross-member 25 at points disposed adjacent respective opposite ends thereof. The posts 27 are attached to the upper rear cross-member 24 and extend upwardly to a point disposed above the centre backrest 20. The upper ends of the post 27 are interconnected by a cross-member 28, which supports headrest 29. Apertured plates 30 are welded to the upper ends of each post 27.

For ease of reference, the construction of only one side of the frame will be described hereinafter but it will be appreciated that both sides or the frame are symmetrical with each other. Upper and lower parallel elongate inner side members 31,32 extend forwardly from the lower end of the post 27, the elongate frame members 31,32 being interconnected at the front end of the frame by an inner front upright 33. The upper and lower inner side members 31,32 are also interconnected intermediate their opposite ends by a central inner upright 34. The upper end of the central inner upright 34 is interconnected to the upper end of the opposite central inner upright 34 by an upper central cross-member 35. A parallel lower front central cross-member 36 extends below the upper central front cross-member 35 across the entire width of the frame 23, the lower ends of the uprights 34 being connected thereto.

Upper and lower elongate outer side members 37,38 extend forwardly from the upper and lower ends of the upright 26. The upper outer side member 37 is disposed outwardly of the lower outer side member 38, so that it extends over the wheel arch of the vehicle. The upper outer side member 37 also has a curved profile at its rear end to conform with the profile of the interior of the rear of the vehicle.

An outer front upright 41 extends between the front end of the lower outer side member 38 parallel to the inner front upright 33, the front uprights 33,41 being interconnected at their upper ends by an inner front cross-member 40. The upper end of the outer front upright 41 is also connected to the front end of the upper outer side member 37 by an outer front cross-member 39. The lower ends of the inner and outer front uprights 33, 41 are interconnected by a lower front cross-member 43. The outer ends of the elongate lower central cross-member 36 is connected to the rear end of a central top side member 44 by an outer central upright 45, the upper central side member 44 extending parallel to the inner and outer upper side members 31,37 in the same plane thereas. The rear end of the upper central side member 44 is connected to the outer upper side member 37 by an upper central cross-member 46. The upper end of the inner central upright 34 is connected to the upper end of the outer central upright 37 by an upper inner cross-member 47.

It will be appreciated that the frame as hereinbefore described essentially comprises three interconnected box-shaped frames. In order to make the seat into a bed it is necessary to forwardly extend the frame of the side portion by pulling out a subframe 50, which is slidably mounted inside the frame of each side portion. The subframe 50 is only shown fitted to the left hand seat portion in Figures 2 to 5 of the drawings.

An apertured back plate 51 is fitted to the rear wall of the frame between the post 27 and the outer rear upright 26, the upper edge of the plate 51 being connected to the upper rear cross-member 24. A central apertured plate 52 is fitted to the centre of the upper rear cross-member 24.

An elongate outer bracing member 53 extends forwardly and downwardly from the outer end of the upper rear cross-member 24 to the front of the frame 53, where it is attached to the point where the lower end of the outer front upright 43 meets the front end of the outer lower side member 38. The bracing member 53 is also connected intermediate its opposite ends to the outer central upright 45.

A shorter inner bracing member 54 extends forwardly and downwardly from the point where the post 27 is connected to the upper rear cross-member 24. The front end of the inner bracing member 54 is connected to the lower central cross-member 36 at the point at where it is connected to the inner central upright 34. A mounting plate 60 is fitted to each corner of the frame at the bottom end of the uprights 26, 41. The position of the plates 60 corresponds to the position of load lashing points provided in the floor of the vehicle.

During construction of the motorcaravan, the load lashing points are removed from the vehicle prior to fitting a suitable hard floor surface inside the load area. The frame 53 is then positioned inside the load area at the rear end of the vehicle. The frame 53 is fastened in-situ by passing bolts through the plates 60 and into the apertures where the load lashing points were fixed. A seatbelt reel is then fitted to the plate 51 and the webbing 70 of the seatbelt is then extended upwardly through an eyelet 71 fitted to the plate 30 at the upper end of the post 27. An eyelet on the free end of the webbing 70 is then also fitted to the plate 51. A seatbelt buckle receptacle 73 is then fitted to the central plate 52.

The exterior exposed side faces of the frame are then clad with suitable lightweight furniture panels and the cushions 17, 18, 19 and backrests 20, 21 and 22 are fitted in situ.

A passenger can sit on the rear seat portion 10 and fir the seat belt in the normal way by passing the buckle 72 around their body and fastening it to the receptacle 73. In the event of an accident, a substantial force pulls the upper end of the post 27 forwardly. However, this force is then transmitted to the rear of the frame and the bracing members 53, 54 and the side members 31,32,37,38 serve to distribute the load throughout the frame in such a way that the frame does not collapse.

A seat in accordance with the present invention provides an ideal seating arrangement in a motorcaravan but yet is able to safely carry belted passengers.

## Claims

1. A seat for a motorcaravan comprising a central seat portion (10) and opposite side seat portions (11,12) extending forwardly from respective opposite ends of the front of the central portion (10) and defining a gap (13) therebetween, each seat portion comprising a base (14,15,16), a seat cushion (17,18,19) mounted on the base (14,15,16) and a backrest (20,21,22), **characterised in that** a post (27) upstands from the rear of the base (14) of the central portion (10) adjacent opposite ends thereof, the upper end of each post providing an upper anchorage point (30) for a seat belt (70) disposed above the backrest (20) of the central portion (10), each end of the base of the central portion comprising first and second outer anchorage points (51) for the ends of the seat belt (70) and an inner anchorage point (52) for a seat belt buckle receptacle (73).

2. A seat according to claim 1, **characterised in that** a belt reel of the seat belt (70) is fitted to the first outer anchorage point, wherein webbing of the seat belt (70) then extends upwardly through an eyelet(71) fitted to the upper anchorage point (30), an eyelet on the free end of the webbing being fitted to the second outer anchorage point, and wherein the seat belt buckle receptacle (73) fixed to said inner anchorage point (52) is arranged for receiving a buckle (72) is slidably mounted on the webbing.

3. A seat according to claim 1 or 2, **characterised in that** the upper ends of the posts (27) are interconnected by a cross-member (28).

4. A seat according to claim 3, **characterised in that** headrests (29) are disposed on the cross-member (28).

5. A seat according to any preceding claim, **characterised in that** the base (14) of the central portion (10) comprises a rear wall at least partially defined by the lower ends of the posts (27), each end of the central portion (10) comprising first and second bracing members (54,53) extending forwardly and downwardly from an upper portion of the wall to respective first and second points of the seat, said second point being disposed forwardly of the first point.

6. A seat according to claim 5, **characterised in that** said inner and outer anchorage points (52,51) are disposed on said rear wall.

7. A seat according to claim 5 or 6, **characterised in that** the forward end of each first bracing member (54) extends to the front of the base (14) of the central portion (10).

8. A seat according to any of claims 5 to 7, **characterised in that** the rearward ends of the first bracing members (54) extend from respective posts (27).

9. A seat according to any of claims 5 to 8, **characterised in that** the forward end of each second bracing member (53) extends into the base (15,16) of its respective side seat portion (11,12).

10. A seat according to claim 9, **characterised in that** the forward end of each second bracing member (53) extends to a point disposed at the forward end the base (15,16) of its respective side seat portion(11,12).

11. A seat according to any of claims 5 to 10, **characterised in that** the rearward end of each second bracing member (53) extends from a point disposed adjacent the respective end of the rear of the base (14) of the central portion (10).

12. A seat according to any preceding claim, **characterised in that** the bases (14,15,16) of the seat portions (10,11,12) are formed of metal as a unitary frame member (23).

13. A motorcaravan comprising a vehicle and **characterised in that** a seat as defined in any of the preceding claims is fitted to a floor disposed inside a rear area of the vehicle, the seat being positioned such that the central portion (10) extends across the back of the vehicle and the opposite side seat portions (11,12) extend forwardly along respective opposite sides of the vehicle.

14. A motorcaravan as claimed in claim 13, **characterised in that** the seat comprises apertures (60) on the bottom thereof, through with bolts pass to anchor the seat to the floor of the motorcaravan.

15. A method of fitting a seat as claimed in any of claims 1 to 12 to a vehicle, **characterised in that** the method comprises removing a plurality of bolts holding respective load lashing points to externally screw-threaded mountings on the floor of the vehicle, positioning the seat such that apertures (60) on the bottom thereof align with said mountings and fastening the seat in-situ by passing bolts through the apertures into the mountings.

## Patentansprüche

1. Sitz für einen Motorwohnwagen, umfassend einen zentralen Sitzabschnitt(10) und gegenüberliegende seitliche Sitzabschnitte (11, 12), die sich von entsprechenden gegenüberliegenden Enden der Vorderseite des zentralen Abschnitts (10) nach vom erstrecken und eine Lücke (13) dazwischen definieren, wobei jeder Sitzabschnitt eine Basis (14, 15, 16), ein an der Basis (14, 15, 16) montiertes Sitzpolster (17, 18, 19) und eine Rückenlehne (20, 21, 22) umfasst, **dadurch gekennzeichnet, dass** ein Pfosten (27) von der Rückseite der Basis (14) des zentralen Sitzabschnitts (10) neben gegenüberliegenden Enden davon nach oben ragt, wobei das obere Ende jedes Pfostens einen oberen Verankerungspunkt (30) für einen Sicherheitsgurt (70), der über der Rückenlehne (20) des zentralen Abschnitts (10) angeordnet ist, bereitstellt, wobei jedes Ende der Basis des zentralen Abschnitts einen ersten und zweiten äußeren Verankerungspunkt (51) für die Enden des Sicherheitsgurts (70) und einen inneren Verankerungspunkt (52) für eine Sicherheitsgurtschnallenaufnahme (73) umfasst.

2. Sitz nach Anspruch 1, **dadurch gekennzeichnet, dass** eine Gurtspule des Sicherheitsgurts (70) an dem ersten äußeren Verankerungspunkt befestigt ist, wobei sich Gurtband des Sicherheitsgurts (70) dann nach oben durch eine Öse (71) erstreckt, die an dem oberen Verankerungspunkt (30) befestigt ist, wobei eine Öse an dem freien Ende des Gurtbands an dem zweiten äußeren Verankerungspunkt angebracht ist und wobei die Sicherheitsgurtschnallenaufnahme (73), die an dem inneren Verankerungspunkt (52) befestigt ist, zum Aufnehmen einer Schnalle (72), die verschiebbar an dem Gurtband montiert ist, angeordnet ist.

3. Sitz nach Anspruch 1 oder 2, **dadurch gekennzeichnet, dass** die oberen Enden der Pfosten (27) durch eine Querstrebe (28) miteinander verbunden sind.

4. Sitz nach Anspruch 3, **dadurch gekennzeichnet, dass** Kopfstützen (29) an der Querstrebe (28) angeordnet sind.

5. Sitz nach einem vorhergehenden Anspruch, **dadurch gekennzeichnet, dass** die Basis (14) des zentralen Abschnitts (10) eine hintere Wand, die zumindest teilweise durch die unteren Enden der Pfosten (27) definiert ist, umfasst, wobei jedes Ende des zentralen Abschnitts (10) ein erstes und zweites Abstützelement (54, 53) umfasst, die sich von einem oberen Abschnitt der Wand nach vom und nach unten zu einem entsprechenden ersten und zweiten Punkt des Sitzes erstrecken, wobei der zweite Punkt vor dem ersten Punkt angeordnet ist.

6. Sitz nach Anspruch 5, **dadurch gekennzeichnet, dass** der innere und äußere Verankerungspunkt (52, 51) an der hinteren Wand angeordnet sind.

7. Sitz nach Anspruch 5 oder 6, **dadurch gekennzeichnet, dass** sich das vordere Ende jedes ersten Abstützelements (54) zu der Vorderseite der Basis (14) des zentralen Abschnitts (10) erstreckt.

8. Sitz nach einem der Ansprüche 5 bis 7, **dadurch gekennzeichnet, dass** sich die hinteren Enden der ersten Abstützelemente (54) von entsprechenden Pfosten (27) erstrecken.

9. Sitz nach einem der Ansprüche 5 bis 8, **dadurch gekennzeichnet, dass** sich das vordere Ende jedes zweiten Abstützelements (53) in die Basis (15, 16) seines entsprechenden seitlichen Sitzabschnitts (11, 12) erstreckt.

10. Sitz nach Anspruch 9, **dadurch gekennzeichnet, dass** sich das vordere Ende jedes zweiten Abstützelements (53) zu einem Punkt erstreckt, der an dem vorderen Ende der Basis (15, 16) seines entsprechenden seitlichen Sitzabschnitts (11, 12) angeordnet ist.

11. Sitz nach einem der Ansprüche 5 bis 10, **dadurch gekennzeichnet, dass** sich das hintere Ende jedes zweiten Abstützelements (53) von einem Punkt erstreckt, der neben dem entsprechenden Ende der Rückseite der Basis (14) des zentralen Abschnitts (10) angeordnet ist.

12. Sitz nach einem vorhergehenden Anspruch, **dadurch gekennzeichnet, dass** die Basen (14, 15, 16) der Sitzabschnitte (10, 11, 12) aus Metall als ein einheitliches Rahmenelement (23) ausgebildet sind.

13. Motorwohnwagen, umfassend ein Fahrzeug und **dadurch gekennzeichnet, dass** ein Sitz nach einem der vorhergehenden Ansprüche an dem Boden, der in einem hinteren Bereich des Fahrzeugs angeordnet ist, angebracht ist, wobei der Sitz derart angeordnet ist, dass sich der zentrale Abschnitt (10) entlang der Rückseite des Fahrzeugs erstreckt und die gegenüberliegenden seitlichen Sitzabschnitte (11, 12) sich entlang entsprechender gegenüberliegender Seiten des Fahrzeugs nach vom erstrecken.

14. Motorwohnwagen nach Anspruch 13, **dadurch gekennzeichnet, dass** der Sitz Öffnungen (60) am Boden davon umfasst, durch welche Schrauben hindurchreichen, um den Sitz mit dem Boden des Motorwohnwagens zu verankern.

15. Verfahren zum Anbringen eines Sitzes nach einem der Ansprüche 1 bis 12 an ein Fahrzeug, **dadurch gekennzeichnet, dass** das Verfahren Entfernen einer Vielzahl von Schrauben, welche entsprechende Lastverzurrungspunkte an externen Schraubgewindehalterungen am Boden des Fahrzeugs halten, Anordnen des Sitzes, derart, dass sich Öffnungen (60) am Boden davon an den Halterungen ausrichten, und Befestigen des Sitzes in situ durch Führen von Schrauben durch die Öffnungen in die Halterungen umfasst.

## Revendications

1. Siège pour un camping-car comprenant une partie de siège centrale (10) et des parties de siège latérales opposées (11, 12) s'étendant vers l'avant d'extrémités opposées respectives de l'avant de la partie centrale (10) et définissant un intervalle (13) entre elles, chaque partie de siège comprenant une base (14, 15, 16), un coussin de siège (17, 18, 19) monté sur la base (14, 15, 16) et un dossier (20, 21, 22), **caractérisé en ce qu'**un montant (27) se dresse de l'arrière de la base (14) de la partie centrale (10) à proximité de ses extrémités opposées, l'extrémité supérieure de chaque montant fournissant un point d'ancrage supérieur (30) pour une ceinture de siège (70) disposée au-dessus du dossier (20) de la partie centrale (10), chaque extrémité de la base de la partie centrale comprenant un premier et un second point d'ancrage externe (51) pour les extrémités de la ceinture de siège (70) et un point d'ancrage interne (52) pour un réceptacle de boucle (73) de ceinture de siège.

2. Siège selon la revendication 1, **caractérisé en ce qu'**une bobine de la ceinture de siège (70) est montée au premier point d'ancrage externe, dans lequel la sangle de la ceinture de siège (70) s'étend ensuite vers le haut à travers un oeillet (71) ajusté sur le point d'ancrage supérieur (30), un oeillet sur l'extrémité libre de la sangle étant ajusté sur le second point d'ancrage externe, et dans lequel le réceptacle (73) de la boucle de ceinture de siège fixé audit point d'ancrage interne (52) est agencé pour recevoir une boucle (72) qui est montée à coulissement sur la sangle.

3. Siège selon la revendication 1 ou 2, **caractérisé en ce que** les extrémités supérieures des montants (27) sont interconnectés par une traverse (28).

4. Siège selon la revendication 3, **caractérisé en ce que** des appuie-tête (29) sont disposés sur la traverse (28).

5. Siège selon l'une quelconque des revendications précédentes, **caractérisé en ce que** la base (14) de la partie centrale (10) comprend une paroi arrière au moins partiellement définie par les extrémités inférieures des montants (27), chaque extrémité de la partie centrale (10) comprenant un premier et un second élément d'attache (54, 53) s'étendant vers l'avant et le bas d'une partie supérieure de la paroi à un premier et un second point respectif du siège, ledit second point étant disposé à l'avant du premier point.

6. Siège selon la revendication 5, **caractérisé en ce que** lesdits points d'ancrage interne et externe (52, 51) sont disposés sur ladite paroi arrière.

7. Siège selon la revendication 5 ou 6, **caractérisé en ce que** l'extrémité avant de chaque premier élément d'attache (54) s'étend jusqu'à l'avant de la base (14) de la partie centrale (10).

8. Siège selon l'une quelconque des revendications 5 à 7, **caractérisé en ce que** les extrémités arrière des premiers éléments d'attache (54) s'étendent de montants respectifs (27).

9. Siège selon l'une quelconque des revendications 5 à 8, **caractérisé en ce que** l'extrémité avant de chaque second élément d'attache (53) s'étend dans la base (15, 16) de sa partie de siège latérale respective (11, 12).

10. Siège selon la revendication 9, **caractérisé en ce que** l'extrémité avant de chaque second élément d'attache (53) s'étend jusqu'à un point disposé à l'extrémité avant de la base (15, 16) de sa partie de siège latérale respective (11, 12).

11. Siège selon l'une quelconque des revendications 5 à 10, **caractérisé en ce que** l'extrémité arrière de chaque second élément d'attache (53) s'étend d'un point disposé au voisinage de l'extrémité respective de l'arrière de la base (14) de la partie centrale (10).

12. Siège selon l'une quelconque des revendications précédentes, **caractérisé en ce que** les bases (14, 15, 16) des parties de siège (10, 11, 12) sont formées de métal sous la forme d'un élément de châssis unitaire (23).

13. Camping-car comprenant un véhicule et **caractérisé en ce qu'**un siège tel que défini dans l'une quelconque des revendications précédentes est monté sur un plancher disposé à l'intérieur d'une zone arrière du véhicule, le siège étant disposé de sorte que la partie centrale (10) s'étende en travers du dossier du véhicule et que les parties de siège latérales opposées (11, 12) s'étendent vers l'avant le long de côtés opposés respectifs du véhicule.

14. Camping-car selon la revendication 13, **caractérisé en ce que** le siège comprend des ouvertures (60) sur sa partie inférieure, à travers lesquelles des boulons passent pour ancrer le siège sur le plancher du camping-car.

15. Procédé de montage d'un siège selon l'une quelconque des revendications 1 à 12 dans un véhicule, **caractérisé en ce que** le procédé comprend le retrait d'une pluralité de boulons maintenant des points d'amarrage de charge respectifs sur des montages filetés extérieurement sur le plancher du véhicule, le positionnement du siège de sorte que des ouvertures (60) sur sa partie inférieure s'alignent avec lesdits montages et la fixation du siège in situ en faisant passer des boulons à travers les ouvertures dans les montages.
